(19) Europäisches Patentamt
European Patent Office
Office européen des brevets

(11) **EP 2 326 402 B1**

(12) **EUROPÄISCHE PATENTSCHRIFT**

(45) Veröffentlichungstag und Bekanntmachung des Hinweises auf die Patenterteilung:
**05.10.2016 Patentblatt 2016/40**

(21) Anmeldenummer: **09778154.6**

(22) Anmeldetag: **27.08.2009**

(51) Int Cl.:
**D04H 3/02** *(2006.01)* **D06M 23/06** *(2006.01)*
**D06M 11/05** *(2006.01)* **D06M 11/13** *(2006.01)*
**B01D 39/16** *(2006.01)* **D06M 11/76** *(2006.01)*

(86) Internationale Anmeldenummer:
**PCT/EP2009/006217**

(87) Internationale Veröffentlichungsnummer:
**WO 2010/031490 (25.03.2010 Gazette 2010/12)**

(54) **VERFAHREN ZUR HERSTELLUNG EINES ELEKTRETFILTERELEMENTS**

PROCESS OF PRODUCTION OF AN ELECTRET FILTER

PROCES DE LA PRODUCTION D'UN FILTRE ÉLECTRET

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **16.09.2008 DE 102008047552**

(43) Veröffentlichungstag der Anmeldung:
**01.06.2011 Patentblatt 2011/22**

(73) Patentinhaber: **Carl Freudenberg KG**
**69469 Weinheim (DE)**

(72) Erfinder:
• **VEESER, Klaus**
**69469 Weinheim (DE)**
• **KRAUSE, Martin**
**69502 Hemsbach (DE)**
• **GIANG, Toan-Hieu**
**68519 Viernheim (DE)**
• **ZABOLD, Jochen**
**69488 Birkenau (DE)**

(74) Vertreter: **Ripper, Monika Sigrid**
**Carl Freudenberg KG,**
**Höhnerweg 2-4**
**69469 Weinheim (DE)**

(56) Entgegenhaltungen:
**EP-A1- 0 550 029    EP-A1- 1 471 176**
**WO-A1-01/27371    DE-C1- 10 109 474**
**US-A- 4 215 682    US-A- 4 473 863**
**US-A1- 2006 254 419**

• **DATABASE WPI Week 200333 Thomson Scientific, London, GB; AN 2003-345244 XP002566401 & JP 2002 161467 A (TORAY IND INC) 4. Juni 2002 (2002-06-04)**
• **DATABASE WPI Week 200259 Thomson Scientific, London, GB; AN 2002-552886 XP002566402 & JP 2002 161471 A (TORAY IND INC) 4. Juni 2002 (2002-06-04)**

## Beschreibung

Technisches Gebiet

Die Erfindung betrifft ein Verfahren gemäß dem Oberbegriff des Patentanspruchs 1.

Stand der Technik

Die US 4 215 682 A lehrt, geladene Teilchen auf Melt-Blown-Fasern zu lenken. Die WO 01/27371 A1 zeigt ein Verfahren, bei welchem eine polare Flüssigkeit verwendet wird, um nichtleitende Fasern aufzuladen. Die EP 0 550 029 A1 lehrt, eine Lösung mit einem Leitfähigkeitsmittel in einen Strom von Melt-Blown-Fasern zu sprühen. JP 2002 161 467 A lehrt, Wasser auf Fasern zu sprühen, um ein Elektretfiltermaterial zu fertigen.

Aus der EP 1 417 176 A1 ist ein Verfahren bekannt, bei welchem Fasern durch einen Sprühnebel aus Fluidtropfen geführt werden. Die Fluidtropfen weisen eine Größe von weniger als 20 μm auf. Bei diesem Verfahren werden die Fluidtropfen unter Nutzung des Lenard-Effekts ("Lenard-Charging-Effect") durch Aufspalten elektrisch geladen. Die bereits geladenen Fluidtropfen werden gemeinsam mit den Fasern durch ein elektrisches Feld geführt. Bei diesem Verfahren entstehen statistisch verteilt Fluidtropfen mit unterschiedlichen Polaritäten. Es entstehen hier sowohl positiv als auch negativ geladene Fluidtropfen in nur schwer steuerbarer Verteilung. Des Weiteren ist die Polarität der elektrischen Ladung der Fluidtropfen von der Fluidtropfengröße abhängig. Die Fluidtropfen werden durch das mechanische Versprühen in große und kleine Fluidtropfen mit jeweils unterschiedlicher elektrischer Ladung aufgeteilt.

Filterelemente der eingangs genannten Art sind aus dem Stand der Technik ebenfalls bereits bekannt. Insbesondere ist es bekannt, Vliesstoffe aus Mikrofasern durch verschiedene Verfahren aufzuladen. Aus der EP 0 845 058 A1 ist ein Verfahren bekannt, mit dem Filterelemente einer sehr hohen Filtereffizienz geschaffen werden können. Diese Filterelemente zeichnen sich durch eine sehr hohe Filtereffizienz gegenüber Feinaerosolen aus.

Bei dem aus der EP 0 845 058 A1 bekannten Verfahren werden Wassertropfen als Ladungsträger auf einen fertigen Vliesstoff aufgebracht. Dabei weisen die zugleich aufgebrachten Wassertropfen unterschiedliche Ladungen auf. Zur Verbesserung der elektrischen Aufladbarkeit wird dem Polymer, aus dem die Fasern des Vliesstoffes gefertigt sind, ein Zusatzstoff beigemengt.

Bei diesem Verfahren ist nachteilig, dass die Wassertropfen auf den bereits fertig gestellten Vliesstoff gesprüht werden. Durch die Anwendung dieses Verfahrens treten Filtereffekte auf, die eine kontinuierliche Verteilung der Ladungen innerhalb des Vliesstoffes verhindern. Je dichter der verwendete Vliesstoff ist, desto höher sind die Wasserdrücke, die aufzuwenden sind, um Ladungen homogen innerhalb des Vliesstoffes zu verteilen. Diese hohen Wasserdrücke können jedoch die Vliesstoffstruktur negativ verändern oder sogar zerstören.

Des Weiteren ist nach dem Aufsprühen großer Mengen Wasser ein Trockenprozess erforderlich. Während des Trockenprozesses wird der Vliesstoff thermisch beaufschlagt, wodurch die elektrische Ladung reduziert werden kann. Daher erfolgt die Trocknung vorzugsweise bei niedrigen Temperaturen in einem Vakuum. Hiermit sind ein großer apparativer Aufwand und erhebliche Kosten verbunden.

Darstellung der Erfindung

Der Erfindung liegt daher die Aufgabe zu Grunde, ein Elektretfilterelement zu schaffen, welches bei kostengünstiger Fertigung eine homogene Ladungsverteilung und eine hohe Filtereffizienz zeigt.

Erfindungsgemäß wird die voranstehende Aufgabe mit den Merkmalen des Patentanspruchs 1 gelöst.

Die Fluidtropfen werden erfindungsgemäß durch ein elektrisches Feld, welches sich zwischen einer Gegenelektrode und dem abreissenden Fluidtropfen selbst ausbildet, polarisiert. Dieses elektrische Feld sorgt für einen Ladungsüberschuss am Fluidtropfen, der nach dessen Abriss bestehen bleibt.

Durch diese konkrete Ausgestaltung werden die Fluidtropfen beim Abreißen an der Sprüheinrichtung durch das elektrische Feld nicht nur polarisiert sondern mit einer bevorzugten Ladung aufgeladen. Die Aufladung der Fluidtropfen erfolgt daher nicht zufällig und mit einer gewissen Verteilung, sondern einheitlich. Im Idealfall tragen alle von der Sprüheinrichtung erzeugten Fluidtropfen gleichnamige elektrische Ladungen, das heißt, zeigen die gleiche elektrische Polarität.

Erfindungsgemäß ist daher konkret erkannt worden, dass die Ladung auf den Fluidtropfen nicht zufällig, sondern durch ein elektrisches Feld definiert mit einer steuerbaren Verteilung erzeugbar ist. Dabei ist insbesondere erkannt worden, dass Fluidtropfen einer einheitlichen elektrischen Ladung erzeugbar sind, um Fasern ausschließlich mit einer elektrischen Ladung einer einheitlichen Polarität aufzuladen.

Des Weiteren ist erfingdungsgemäß erkannt worden, dass das elektrische Feld erlaubt, eine deutlich höhere Ladungsmenge pro Fluidtropfenoberfläche zu erzielen. Daher kann das erfindungsgemäße Elektretfilterelement unter Verwendung einer relativ geringen Menge des Fluids eine sehr starke elektrische Aufladung zeigen. Durch Verwendung einer relativ geringen Menge des Fluids ist es nicht notwendig, das Elektretfilterelement zur Trocknung stark zu erwärmen, so dass einerseits Energie gespart und andererseits die elektrische Ladung auf dem Elektretfilterelement nicht geschwächt wird.

Bei diesem Verfahren kann vorteilhaft ein Fluid unter geringem Druck auf Fasern gesprüht werden, bevor diese zu einer Faserlage abgelegt werden. Hierdurch wird eine Veränderung der Struktur der Faserlage vermieden.

Des Weiteren können die Fasern derart mit Ladungen versehen werden, dass diese auch im Inneren der abgelegten Faserlage eine ausreichende Ladungsmenge aufweisen. Durch das genannte Verfahren können Faserlagen mit einer räumlich homogenen Faserladung über dem gesamten Dickenquerschnitt erzeugt werden, wobei die Faserlage nahezu nicht in ihrer Struktur durch Fluide beeinträchtigt wird.

Vor diesem Hintergrund wird ein Sprühnebel erzeugt, in welchem 60% oder mehr als 60% der sich darin aufhaltenden elektrisch geladenen Fluidtropfen, eine elektrische Ladung gleicher Polarität aufweisen. Hierdurch können die Fasern mit einer nahezu einheitlichen elektrischen Ladung versehen werden. Vorzugsweise wird ein Sprühnebel erzeugt, in welchem 80% oder mehr als 80 % der sich darin aufhaltenden elektrisch geladenen Fluidtropfen eine elektrische Ladung gleicher Polarität aufweisen.

Für die Erzeugung des Sprühnebels wird ein Fluid verwendet, in welchem ein Leitfähigkeitssalz gelöst ist. Hierdurch kann nachgewiesen werden, ob ein Elektretfilterelement nach dem hier beschriebenen Verfahren gefertigt wurde, da das Leitfähigkeitssalz und dessen Verteilung auf den Fasern des Elektretfilterelements analytisch nachgewiesen werden kann. Das Leitfähigkeitssalz kann als NaCl oder Ammoniumhydrogencarbonat ausgestaltet sein.

Ein Sprühnebel könnte erzeugt werden, in welchem die Polarität der elektrischen Ladung der sich darin aufhaftenden Fluidtropfen von der Fluidtropfengröße unabhängig ist. Hierdurch ist eine gleichmäßige, homogene und materialschonende Benetzung der Fasern ermöglicht.

Die Fasern könnten auf der der Sprüheinrichtung abgewandten Seite der Gegenelektrode durch den Sprühnebel geführt werden. Hierdurch bleibt das Material, aus dem die Fasern gefertigt sind, vom elektrischen Feld weitgehend unbeeinträchtigt. Die Fluidtropfen werden daher durch ein starkes elektrisches Feld, die Fasern durch einen nahezu feldfreien Raum geführt.

Die elektrische Spannung zwischen dem abreissenden Fluidtropfen und der Gegenelektrode ist in Abhängigkeit von der geometrischen Anordnung und dem eingesetzten Fluid zu wählen. Bevorzugte Werte für die elektrische Spannung liegen zwischen 60 Volt und 15000 Volt. Es ist auch denkbar, bei größeren Abständen zwischen Sprüheinrichtung und Gegenelektrode Spannungen zwischen 30000 V und 100000 Volt zu erzeugen. Die Gegenelektrode kann als Ringelektrode ausgestaltet sein. Die Ausgestaltung als Ringelektrode ist vorteilhaft, da ein kegelförmiger Sprühnebel das Innere des Rings durchdringen kann. Die Werte für den Durchmesser d der Ringelektrode und die Entfernung x der Ringelektrode von der Spitze der Sprüheinrichtung sind empirisch zu ermitteln und hängen von der elektrischen Feldstärke am Abrissort des Fluidtropfens ab. Der Wert d hängt außerdem von den Dimensionen des Kegels des kegelförmigen Sprühnebels ab. Bevorzugt beträgt d zwischen 10 und 50 mm und x zwischen 5 und 40 mm. Des weiteren kann die Gegenelektrode als punktförmige Elektrode innerhalb eines hohlen Sprühkegels ausgestaltet sein.

Als Sprüheinrichtung könnte eine Düse verwendet werden. Eine Düse zeigt einen relativ engen Austrittsbereich, an dem ein Fluid abreißen und zu Fluidtropfen zerstäubt werden kann. Dabei ist darauf zu achten, dass die Düse aus einem nicht leitfähigen Material besteht oder am Austrittsort des Fluidtropfens elektrisch isoliert ist. Des Weiteren wäre denkbar, als Sprüheinrichtung eine Aerosolquelle zu verwenden, die eine definierte Größenverteilung der Fluidtropfen erzeugt, beispielsweise ein Schwingblendenaerosolgenerator.

Die Fluidtropfen könnten durch ein elektrisches Feld mit zeitlich periodisch wechselnder Polarität aufgeladen werden. Die Frequenz dieses periodischen Wechsels ist in Abhängigkeit von der Geschwindigkeit, mit der die Fasern die Sprüheinrichtung passieren, und der gewünschten Ladungsverteilung zu wählen. Durch diese konkrete Ausgestaltung ist es möglich, Fluidtropfen, unterschiedlicher elektrischer Ladung bzw. unterschiedlicher Polarität zur Aufladung der vorbeiströmenden Fasern zu nutzen. Ganz konkret ist hierbei denkbar, dass auf einer einzelnen Faser dadurch mehrere Ladungen unterschiedlicher Polarität verteilt sind. Vor diesem Hintergrund ist auch denkbar, eine Streifenaufladung bzw. eine streifenförmige Aufladung der Fasern zu realisieren.

Die Fasern könnten durch ein Melt-Blown-Verfahren hergestellt und bereitgestellt werden. Durch diese konkrete Ausgestaltung können die Fasern direkt nach ihrer Erzeugung durch einen Melt-Blown-Prozess durch den Sprühnebel hindurchgeführt und aufgeladen werden. Dabei kann ein Fluid verwendet werden, welches unter geringem Druck auf die Fasern gesprüht wird. Die Fasern werden erst nach Aufladung zu einer Faserlage abgelegt, so dass eine negative Beeinträchtigung der Struktur der Faserlage durch die Fluidtropfen verhindert wird.

Das Fluid könnte auf den Fasern verdampft werden, wobei die elektrische Ladung der Fluidtropfen für die Aufladung der Fasern sorgt. Bei Erzeugung der Fasern durch ein Melt-Blown-Verfahren weisen die Fasern unmittelbar nach Verlassen der Melt-Blown-Düse eine Prozesswärme auf. Diese Prozesswärme kann genutzt werden, um die Fluidtropfen zu verdampfen, die sich auf den vorbeiströmenden Fasern anlagern. Des Weiteren sind Fasern, die durch ein Melt-Blown-Verfahren hergestellt sind, direkt nach Verlassen der Melt-Blown-Düse noch weich. Dies hat den Vorteil, dass die Polymere, aus denen die Melt-Blown-Fasern hergestellt sind, durch die elektrisch geladenen Fluidtropfen besonders leicht modifiziert und aufgeladen werden können. Diese elektrische Ladung wird daher sozusagen in Polymeren eingefroren, wenn diese erkalten. Die Ladungen befinden sich nicht nur an der Oberfläche sondern auch innerhalb der Faser, was eine wesentlich höhere Lebensdauer bewirkt.

Es könnten mehrere Faserlagen übereinander abgelegt werden. Durch diese konkrete Ausgestaltung kann ein Elektretfilterelement geschaffen werden, welches verschiedene Faserlagen unterschiedlicher elektrischer Ladungen bzw. Polaritäten aufweist. Beispielsweise ist eine alternierende Abfolge negativ und positiv geladener Faserlagen denkbar, die als Laminat ausgebildet sind.

Die Fasern könnten zwischen zwei Sprühnebeln hindurchgeführt werden. Hierdurch ist eine beidseitige Aufladung eines Faserstroms oder von Fasern eines Faserstroms realisierbar.

Die Fasern könnten zwischen zwei Sprühnebel hindurchgeführt werden, wobei die Fluidtropfen durch gegensinnig oder gleichsinnig orientierte elektrische Felder zwischen den abreissenden Fluidtropfen und den jeweiligen Gegenelektroden elektrisch aufgeladen werden. Hierdurch ist eine beidseitige Aufladung eines Faserstroms oder von Fasern eines Faserstroms realisierbar, wobei auf beiden Seiten entweder elektrische Ladungen gleicher Polarität oder unterschiedlicher Polaritäten aufbringbar sind.

Durch die erhöhte Ladungsmenge in den Fluidtropfen wird die Filterwirksamkeit des Elektretfilterelements verbessert, so dass ein $\gamma$-Wert von > 0,14 erreicht wird. Dabei ermittelt sich der $\gamma$-Wert aus der Gleichung:

$$\gamma = (- \ln (\text{Penetration})) / \text{Druckdifferenz},$$

Dabei wird die Druckdifferenz zwischen Anströmseite und Abströmseite eines Elektretfilterelements in Pascal eingesetzt. Für die Penetration werden Werte zwischen 0 und 1 eingesetzt, wobei 1 für einen Penetrationsgrad von 100 % steht. Dies bedeutet, dass durch eine angeströmte Elektretfilterelementfläche alle Partikel hindurchgehen. Ein Wert von 0 drückt aus, dass alle Partikel zurückgehalten werden. Die Partikel sind als NaCl-Partikel mit einem mittleren Durchmesser von 0,26 $\mu$m ausgestaltet. Die Konzentration des NaCl im anströmenden Fluidstrom beträgt 12 bis 20 mg/m$^3$.

Das Elektretfilterelement wird durch das hier beschriebene Verfahren gefertigt.

Die Fasern könnten innerhalb einer Faserlage gleichnamige Ladungen tragen. Durch diese konkrete Ausgestaltung ist es möglich, ein Elektretfilterelement zu schaffen, welches aus mehreren unterschiedlichen Faserlagen besteht, die unterschiedliche elektrische Polaritäten zeigen.

Vor diesem Hintergrund ist denkbar, dass die Fasern innerhalb einer Faserlage Ladungen unterschiedlicher Polarität tragen, wobei auf mindestens einer der Fasern mehrere Ladungen unterschiedlicher Polarität verteilt sind. Dadurch können eine Vielzahl von Mikrofeldern auf einer Faser erzeugt werden, so dass die gesamte Faserlage ein besonders hohes Abscheidevermögen für Feinaerosole zeigt.

Es gibt nun verschiedene Möglichkeiten, die Lehre der vorliegenden Erfindung auf vorteilhafte Weise auszugestalten und weiterzubilden. Dazu ist einerseits auf die nachgeordneten Ansprüche, andererseits auf die nachfolgende Erläuterung bevorzugter Ausführungsbeispiele des erfindungsgemäßen Verfahrens anhand der Zeichnung zu verweisen.

In Verbindung mit der Erläuterung der bevorzugten Ausführungsbeispiele anhand der Zeichnung werden auch im Allgemeinen bevorzugte Ausgestaltungen und Weiterbildungen der Lehre erläutert.

Kurzbeschreibung der Zeichnung

In der Zeichnung zeigen

Fig. 1     eine Seitenansicht der Sprüheinrichtung, der eine Ringelektrode gegenüberliegt,

Fig. 2     eine Detailansicht der Spitze der Sprüheinrichtung mit Darstellung einer Ausrichtung des elektrischen Feldes zum im Abriss befindlichen Fluidtropfen,

Fig. 3     eine schematische Ansicht von Fasern, die durch ein Melt-Blown-Verfahren hergestellt sind und durch einen kegelförmigen Sprühnebel aus elektrisch geladenen Fluidtropfen geführt werden,

Fig. 4     eine schematische Ansicht einer einzelnen Faser, auf der sich exemplarisch negativ geladene Fluidtropfen anlagern, und

Fig. 5     eine schematische Ansicht eines Verfahrens, bei dem Fasern zwischen zwei Sprühnebeln hindurchgeführt werden.

Ausführung der Erfindung

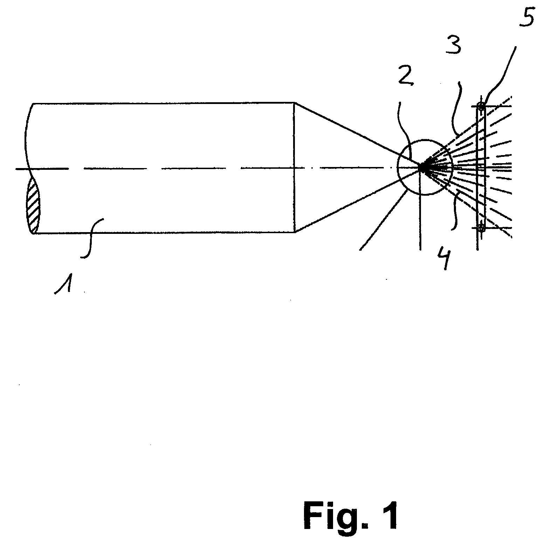

Fig. 1 zeigt in einer Seitenansicht eine Sprüheinrichtung 1, die als Düse ausgebildet ist. Aus der Spitze 2 der Sprüheinrichtung 1 tritt ein kegelförmiger Sprühnebel 3 aus, der aus einzelnen Fluidtropfen 4 besteht. Die Fluidtropfen 4 sind elektrisch geladen. Die Aufladung erfolgt durch ein elektrisches Feld, das sich zwischen den abreissenden Fluidtropfen 4a und einer Ringelektrode 5 ausbildet.

Im Sprühnebel 3 weisen 60% oder mehr als 60% der sich darin aufhaltenden elektrisch geladenen Fluidtropfen 4 eine elektrische Ladung gleicher Polarität auf. Im Sprühnebel 3 ist die Polarität der elektrischen Ladung der sich darin aufhaltenden Fluidtropfen 4 von der Fluidtropfengröße unabhängig.

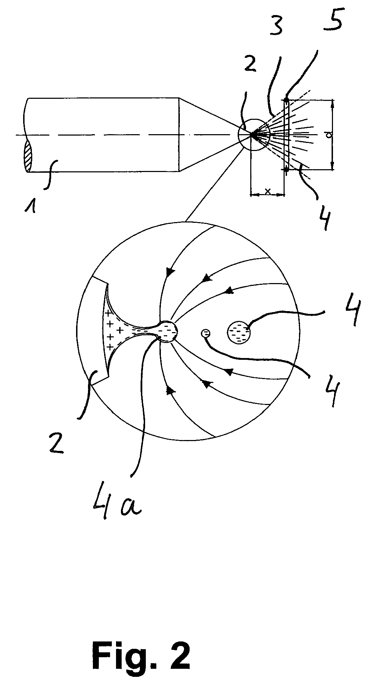

Fig. 2 zeigt in einer Detailansicht (kreisförmige Ansicht) die Spitze 2 der Sprüheinrichtung 1 gemäß Fig. 1, aus der Fluidtropfen 4 austreten und abreissen. Die Fluidtropfen 4a werden vor ihrem Abreissen durch ein elektrisches Feld, dessen Feldlinien durch Pfeile dargestellt sind, definiert im hier skizzierten Fall mit negativer elektrischer Ladung aufgeladen.

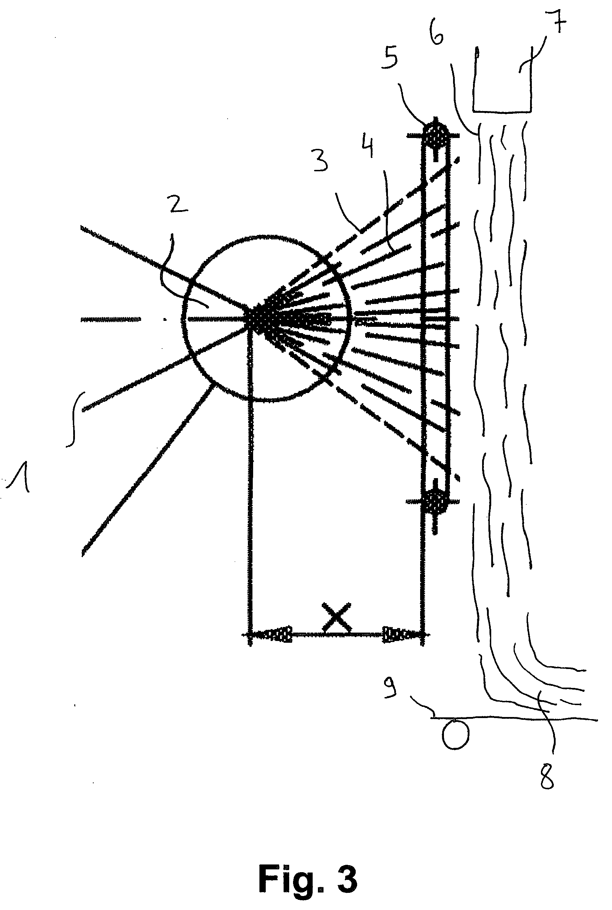

Fig. 3 zeigt in einer schematischen Ansicht die Sprüheinrichtung 1, aus deren Spitze 2 ein Sprühnebel 3 austritt. Der Sprühnebel 3 besteht aus elektrisch geladenen Fluidtropfen 4. Die Fluidtropfen 4 werden durch ein elektrisches Feld aufgeladen, welches sich zwischen den abreissenden Fluidtropfen 4a und der Ringelektrode 5 ausbildet. Die Ringelektrode 5 weist einen Abstand x von etwa 5 bis 40 mm zur Austrittsöffnung der Spitze 2 auf. Die durch den Abriss des Fluidtropfens 4 bedingte Unterbrechung der elektrischen Verbindung zur geerdeten Sprüheinrichtung 1 oder zum geerdeten Fluid verhindert einen Ladungsausgleich. Die definiert negativen Ladungen verbleiben auf dem Fluidtropfen 4 und können so zur Faser 6 transportiert werden.

Das erfindungsgemäße Elektretfilterelement wird nach dem folgenden Verfahren hergestellt:

Es werden Fasern 6 bereitgestellt, die aus einer Melt-Blown-Düse 7 ausgestoßen werden. Des Weiteren wird eine Sprüheinrichtung 1 bereitgestellt, welche einen Sprühnebel 3 aus elektrisch geladenen Fluidtropfen 4 erzeugt. Der Sprühnebel 3 ist als Sprühkegel ausgestaltet. Die Fasern 6 werden durch den kegelförmigen Sprühnebel 3 geführt. Die Fasern 6 werden auf der der Sprüheinrichtung 1 abgewandten Seite der Gegenelektrode 5 durch den Sprühnebel 3 geführt. Dabei werden die Fasern 6 mit den Fluidtropfen 4 benetzt. Darauf werden die Fasern 6 zu einer Faserlage 8 abgelegt. Die Ablage erfolgt auf einem Förderband 9, so dass eine kontinuierliche Herstellung einer Faserlage 8 möglich ist.

Die Fluidtropfen 4 werden durch das elektrische Feld zwischen der Gegenelektrode 5 und dem abreissenden Fluidtropfen 4a elektrisch negativ aufgeladen. Als Sprüheinrichtung 1 wird eine Düse verwendet. Die Fasern 6 werden durch ein Melt-Blown-Verfahren hergestellt und bereitgestellt. Bei den Fasern 6 handelt es sich um Mikrofasern, die einen Durchmesser zwischen 0,1 μm und 20 μm aufweisen. Bei dem Fluid handelt es sich um Wasser. Bevorzugt zeigt das Fluid bzw. das Wasser eine elektrische Leitfähigkeit, die eine Polarisierbarkeit des abreissenden Fluidtropfens 4a bei der vorliegenden elektrischen Feldstärke am Abrissort des Fluidtropfens 4a erleichtert. Die elektrische Leitfähigkeit kann durch ein geeignetes Additiv, beispielsweise ein Leitfähigkeitssalz wie NaCl oder Ammoniumhydrogencabonat, modifiziert werden. Das Additiv sollte vorzugsweise nicht auf der Faser 6 verbleiben. Das Additiv kann aber in für die Anwendung unkritischen Mengen vorteilhaft auf den Fasern 6 verbleiben, um durch geeignete Analytik nachweisbar zu sein.

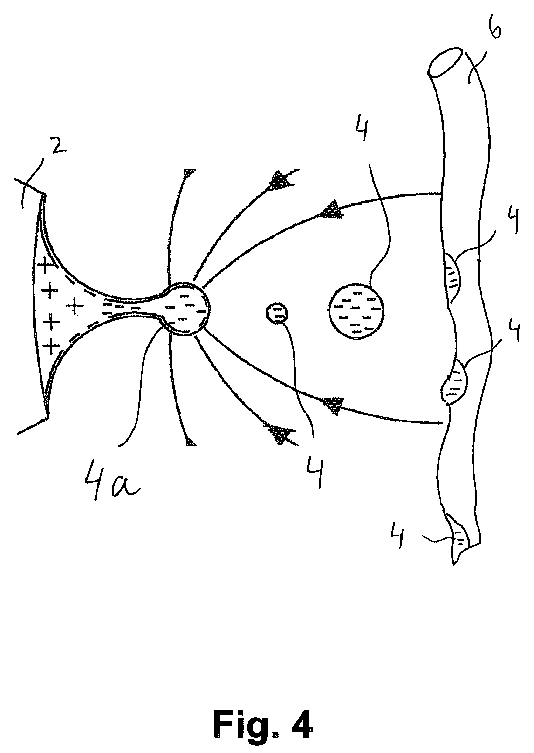

Fig. 4 zeigt eine nicht maßstäbliche Detailansicht einer Faser 6, auf der sich exemplarisch negativ geladene Fluidtropfen 4 anlagern. Das Fluid verdampft auf der Faser 6 und die elektrische Ladung der Fluidtropfen 4 bewirkt die Aufladung der Faser 6. Die Prozesswärme der Faser 6, die durch ein Melt-Blown-Verfahren hergestellt wurde, wird genutzt, um das Fluid zu verdampfen. Den Polymeren, aus denen die Fasern 6 hergestellt sind, kann zur Verbesserung der elektrischen Aufladbarkeit ein Zusatzstoff zur Ladungssteuerung beigemengt werden. Als Zusatzstoff könnte beispielsweise Chimassorb, Firma CIBA eingesetzt werden.

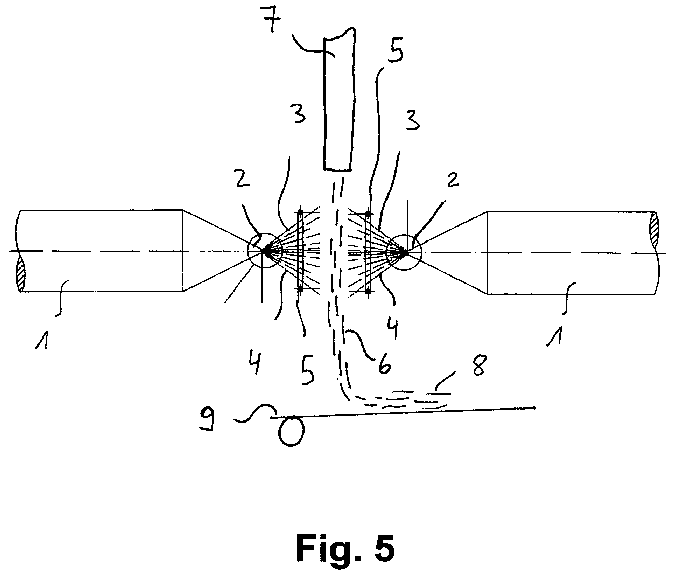

Fig. 5 zeigt in schematischer Ansicht die Durchführung eines Verfahrens, bei dem die Fasern 6 zwischen zwei gegenüberliegenden Sprühnebeln 3 hindurchgeführt werden. Die Fasern 6 können zwischen zwei Sprühnebeln 3 hindurchgeführt werden, wobei die Fluidtropfen 4 durch gegensinnig oder gleichsinnig orientierte elektrische Felder zwischen den abreissenden Fluidtropfen 4a und den jeweiligen Gegenelektroden 5 elektrisch aufgeladen werden.

Ein weiteres Elektretfilterelement wird dann nach dem folgenden Verfahren hergestellt:

Es werden Fasern 6 bereitgestellt, die aus der Melt-Blown-Düse 7 ausgestoßen werden. Des Weiteren werden gegenüberliegende zwei Sprüheinrichtungen 1 bereitgestellt, welche zwei Sprühnebel 3 aus elektrisch geladenen Fluidtropfen 4 erzeugen. Die Sprühnebel 3 sind als Sprühkegel ausgestaltet. Die Fasern 6 werden zwischen den kegelförmigen Sprühnebeln 3 durchgeführt. Die Fasern 6 werden auf den der jeweiligen Sprüheinrichtung 1 abgewandten Seite der jeweiligen Gegenelektrode 5 durch den Sprühnebel 3 geführt. Dabei werden die Fasern 6 mit den Fluidtropfen 4 beidseitig benetzt. Darauf werden die Fasern 6 zu einer Faserlage 8 abgelegt. Die Ablage erfolgt auf einem Förderband 9, so dass eine kontinuierliche Herstellung einer Faserlage 8 möglich ist.

Die Fluidtropfen 4 werden durch die elektrischen Felder zwischen den Gegenelektroden 5 und den abreissenden Fluidtropfen 4a elektrisch negativ aufgeladen. Als Sprüheinrichtung 1 wird eine Düse verwendet. Die Fasern 6 werden durch ein Melt-Blown-Verfahren hergestellt und bereitgestellt. Bei den Fasern 6 handelt es sich um Mikrofasern, die einen Durchmesser zwischen 0,1 μm und 20 μm aufweisen. Bei dem Fluid handelt es sich um Wasser. Bevorzugt zeigt das Fluid bzw. das Wasser eine elektrische Leitfähigkeit, die eine Polarisierbarkeit des abreissenden Fluidtropfens 4a bei der vorliegenden elektrischen Feldstärke am Abrissort des Fluidtropfens 4a erleichtert. Die elektrische Leitfähigkeit kann durch ein geeignetes Additiv, beispielsweise ein Leitfähigkeitssalz wie NaCl oder Ammoniumhydrogencabonat, modifiziert werden. Das Additiv sollte vorzugsweise nicht auf der Faser 6 verbleiben. Das Additiv kann aber in für die Anwendung unkritischen Mengen vorteilhaft auf den Fasern 6 verbleiben, um durch geeignete Analytik nachweisbar zu sein.

Hinsichtlich weiterer vorteilhafter Ausgestaltungen und Weiterbildungen der erfindungsgemäßen Lehre wird einerseits auf den allgemeinen Teil der Beschreibung und andererseits auf die Patentansprüche verwiesen.

Abschließend sei ganz besonders hervorgehoben, dass die zuvor ausgewählten Ausführungsbeispiele lediglich zur Erörterung der erfindungsgemäßen Lehre dienen, diese jedoch nicht auf diese Ausführungsbeispiele einschränken.

## Patentansprüche

1. Verfahren zur Herstellung eines Elektretfilterelements umfassend die Schritte:

   Bereitstellen von Fasern (6), Bereitstellen einer Sprüheinrichtung (1) für ein Fluid, Erzeugen eines Sprühnebels (3) aus elektrisch geladenen Fluidtropfen (4), Führen der Fasern (6) durch den Sprühnebel (3), Benetzen der Fasern (6) mit den Fluidtropfen (4) und Ablegen der Fasern (6) zu einer Faserlagen (8), wobei die Fluidtropfen (4) durch ein elektrisches Feld zwischen abreissenden Fluidtropfen (4a) und einer Gegenelektrode (5) elektrisch aufgeladen werden, wobei ein Sprühnebel (3) erzeugt wird, in welchem 60% oder mehr als 60% der sich darin aufhaltenden elektrisch geladenen Fluidtropfen (4) eine elektrische Ladung gleicher Polarität aufweisen, **dadurch gekennzeichnet, dass** für die Erzeugung des Sprühnebels (3) ein Fluid verwendet wird, in welchem ein Leitfähigkeitssalz gelöst ist.

2. Verfahren nach Anspruch 1, **dadurch gekennzeichnet, dass** ein Sprühnebel (3) erzeugt wird, in welchem die Polarität der elektrischen Ladung der sich darin aufhaltenden Fluidtropfen (4) von der Fluidtropfengröße unabhängig ist.

3. Verfahren nach Anspruch 1 oder 2, **dadurch gekennzeichnet, dass** die Fasern (6) auf der der Sprüheinrichtung (1) abgewandten Seite der Gegenelektrode (5) durch den Sprühnebel (3) geführt werden.

4. Verfahren nach einem der Ansprüche 1 bis 3, **dadurch gekennzeichnet, dass** als Sprüheinrichtung (1) eine Düse (2) verwendet wird.

5. Verfahren nach einem der Ansprüche 1 bis 4, **dadurch gekennzeichnet, dass** die Fluidtropfen (4) durch ein elektrisches Feld mit zeitlich wechselnder Polarität aufgeladen werden.

6. Verfahren nach einem der Ansprüche 1 bis 5, **dadurch gekennzeichnet, dass** die Fasern (6) durch ein Melt-Blown-Verfahren hergestellt und bereitgestellt werden.

7. Verfahren nach einem der Ansprüche 1 bis 6, **dadurch gekennzeichnet, dass** das Fluid auf den Fasern (6) verdampft wird, wobei die elektrische Ladung der Fluidtropfen (4) die Aufladung der Fasern (6) bewirkt.

8. Verfahren nach einem der Ansprüche 1 bis 7, **dadurch gekennzeichnet, dass** mehrere Faserlagen (8) übereinander abgelegt werden.

9. Verfahren nach einem der Ansprüche 1 bis 8, **dadurch gekennzeichnet, dass** die Fasern (6) zwischen zwei Sprühnebeln (3) hindurchgeführt werden.

10. Verfahren nach Anspruch 9, **dadurch gekennzeichnet, dass** die Fasern (6) zwischen zwei Sprühnebeln (3) hindurchgeführt werden, wobei die Fluidtropfen (4) durch gegensinnig oder gleichsinnig orientierte elektrische Felder zwischen den abreissenden Fluidtropfen (4a) und den jeweiligen Gegenelektroden (5) elektrisch aufgeladen werden.

## Claims

1. Method for producing an electret filter element, comprising the steps of:

   providing fibers (6), providing a spray apparatus (1) for a fluid, generating an atomized spray (3) of electrically charged fluid droplets (4), guiding the fibers (6) through the atomized spray (3), wetting the fibers (6) with the fluid droplets (4) and depositing the fibers (6) to form a fiber layer (8),
   wherein the fluid droplets (4) are electrically charged by an electric field between detaching fluid droplets (4a) and a counter electrode (5), wherein an atomized spray (3) is generated, in which 60% or more than 60% of the electrically charged fluid droplets (4) contained therein have an electric charge with the same polarity, **characterized in that** a fluid with a conduction salt dissolved therein is used for generating the atomized spray (3).

2. Method according to Claim 1, **characterized in that** an atomized spray (3) is generated, in which the polarity of the electric charge of the droplets (4) contained therein is independent of the droplet size.

3. Method according to Claim 1 or 2, **characterized in that** the fibers (6) are guided through the atomized spray (3) on the side of the counter electrode (5) facing away from the spray apparatus (1).

4. Method according to Claims 1 to 3, **characterized in that** a nozzle (2) is used as a spray apparatus (1).

5. Method according to one of Claims 1 to 4, **charac-**

**terised in that** the fluid droplets (4) are charged by an electric field whose polarity alternates over time.

6. Method according to one of Claims 1 to 5, **characterized in that** the fibers (6) are produced and provided by a melt-blown method.

7. Method according to one of claims 1 to 6, **characterized in that** the fluid is evaporated onto the fibers (6), with the electric charge of the fluid droplets (4) charging the fibers (6).

8. Method according to one of Claims 1 to 7, **characterized in that** a plurality of fiber layers (8) are deposited over one another.

9. Method according to one of Claims 1 to 8, **characterized in that** the fibers (6) are passed through between two atomized sprays (3).

10. Method according to Claim 9, **characterized in that** the fibers (6) are passed through between two atomized sprays (3), with the fluid droplets (4) being electrically charged by electric fields with parallel or antiparallel orientations between the detaching fluid droplets (4a) and the respective counter electrodes (5).

**Revendications**

1. Procédé de fabrication d'un filtre électret, comprenant les étapes suivantes:

préparer des fibres (6), préparer un dispositif de pulvérisation (1) pour un fluide, produire un nuage de pulvérisation (3) en gouttes de fluide électriquement chargées (4), conduire les fibres (6) à travers le nuage de pulvérisation (3), mouiller les fibres (6) avec les gouttes de fluide (4) et déposer les fibres (6) en une couche de fibres (8), dans lequel on charge électriquement les gouttes de fluide (4) au moyen d'un champ électrique entre des gouttes de fluide arrachées (4a) et une contre-électrode (5), dans lequel on produit un nuage de pulvérisation (3), dans lequel 60 % ou plus de 60 % des gouttes de fluide électriquement chargées (4) s'arrêtant dans celui-ci présentent une charge électrique de même polarité, caractérisé en ce l'on utilise pour la production du nuage de pulvérisation (3) un fluide dans lequel un sel de conductibilité est dissous.

2. Procédé selon la revendication 1, **caractérisé en ce que** l'on produit un nuage de pulvérisation (3), dans lequel la polarité de la charge électrique des gouttes de fluide (4) qui s'y arrêtent est indépendante de la taille des gouttes de fluide.

3. Procédé selon la revendication 1 ou 2, **caractérisé en ce que** l'on conduit les fibres (6) à travers le nuage de pulvérisation (3) sur le côté de la contre-électrode (5) détourné du dispositif de pulvérisation (1).

4. Procédé selon l'une quelconque des revendications 1 à 3, **caractérisé en ce que** l'on utilise une buse (2) comme dispositif de pulvérisation (1).

5. Procédé selon l'une quelconque des revendications 1 à 4, **caractérisé en ce que** l'on charge les gouttes de fluide (4) au moyen d'un champ électrique dont la polarité alterne dans le temps.

6. Procédé selon l'une quelconque des revendications 1 à 5, **caractérisé en ce que** l'on produit et on prépare les fibres (6) par un procédé de fusion-soufflage.

7. Procédé selon l'une quelconque des revendications 1 à 6, **caractérisé en ce que** l'on vaporise le fluide sur les fibres (6), dans lequel la charge électrique des gouttes de fluide (4) provoque le chargement des fibres (6).

8. Procédé selon l'une quelconque des revendications 1 à 7, **caractérisé en ce que** l'on dépose plusieurs couches de fibres (8) l'une au-dessus de l'autre.

9. Procédé selon l'une quelconque des revendications 1 à 8, **caractérisé en ce que** l'on conduit les fibres (6) entre deux nuages de pulvérisation (3).

10. Procédé selon la revendication 9, **caractérisé en ce que** l'on conduit les fibres (6) entre deux nuages de pulvérisation (3), dans lequel on charge électriquement les gouttes de fluide (4) au moyen de champs électriques orientés en sens contraire ou dans le même sens entre les gouttes de fluide arrachées (4a) et les contre-électrodes respectives (5).

**Fig. 1**

**Fig. 2**

**Fig. 3**

**Fig. 4**

**Fig. 5**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4215682 A
- WO 0127371 A1
- EP 0550029 A1
- JP 2002161467 A
- EP 1417176 A1
- EP 0845058 A1